# EUROPEAN PATENT SPECIFICATION

(11) **EP 0 304 587 B1**
(45) Date of publication and mention of the grant of the patent: **07.06.1995**
(21) Application number: 88110696.7
(22) Date of filing: 05.07.1988
(51) Int. Cl.: G06F 12/08

(54) **Interruptible cache loading**
Unterbrechbares Cache-Laden
Chargement interruptible d'antémémoire

(30) Priority: 24.08.1987 US 88753
(43) Date of publication of application: 01.03.1989
(73) Proprietor: International Business Machines Corporation, Armonk, N.Y. 10504 (US)
(72) Inventor: Jeremiah, Thomas Leo, Endwell, N.Y. 13760 (US); Ruane, Albert Joseph, Endicott, N.Y. 13760 (US); Zurla, Frank Anthony, Binghampton, N.Y. 13903 (US)
(74) Representative: Schäfer, Wolfgang, Dipl.-Ing.

(56) References cited:
- US-A- 3 705 388
- US-A- 4 646 233
- IBM TECHNICAL DISCLOSURE BULLETIN, vol. 25, no. 12, May 1983, pages 6440-6442,New York, US; J. YAMOUR: "Method for processing multiple cache line misses that results in greatly enhancing CPU utilization and performance"

## Description

The present invention relates to a data processing system according to the preamble of claim 1.

In the field of data processing, sophisticated high speed computers often incorporate large memories or data storage devices. While the speed of the engines or processors within such computer systems has consistently increased over the years, so too have computer applications continued to demand ever greater speeds.

Among the many variables to be considered in an attempt to increase the performance of data processing systems, two considerations are the speed of the system processor and the speed with which data can be transferred between the main storage and the processor. In general, when two or more logic devices are incorporated in a computer system, one of the devices operates at a slower rate of speed than do the remaining devices. Overall system performance is of course dependent upon the speed of the slowest logical device.

The speed of a memory device is inversely proportional to the time required to access data stored therein. As sophisticated computer systems develop, memory storage capacity often increases. Although the operating speed of the smallest components may increase, overall system performance may, in fact, degenerate when memory capacity is extremely large.

Historically, it was common for a processor to communicate with main storage by means of individual connections thereto. The great increase in processing power provided by modern processors, however, resulted in a prodigious amount of data constantly being requested by the processor, exceeding the capacity of the main storage to transfer data to the processor at optimal rates. The size of the memory required for use also increased at a faster rate than that of processor improvement. It would have been uneconomical to continue building nonvolatile memories of ever increasing size and speed.

An approach to maximizing performance of a computer system was to develop a temporary memory storage mechanism called a cache. The cache is a relatively high speed memory that tends to be more expensive than conventional data storage devices.

The cache is a limited storage capacity memory that is usually local to the processor and that contains a time-varying subset of the contents of main storage. This subset of data stored in the cache is that data that was recently used by the processor.

The purpose of a cache memory is to reduce cost of a system while minimally affecting the average effective access time for a memory reference. A very high proportion of memory reads can be satisfied out of the high speed cache.

The cache contains a relatively small high speed buffer and control logic situated between two logical devices, such as a processor and main storage. The cache matches the high speed of one of the devices (the processor) to the relatively low speed of the other device (the main storage).

The data most often used is temporarily stored in the high speed buffer. The most recent information requested by one logical device from another logical device is stored in the cache memory simultaneously with its transfer to the first device. Subsequent requests for such information result in the transfer of data directly from the cache to the first device without need for accessing the second device.

When a processor, for example, requests data, a cache first searches its buffer. If the data is stored in the cache, a so-called hit occurs. The data is returned in one or two cycles. Often, of course, the data sought is not stored in the cache. Consequently, a so-called miss occurs and the cache must retrieve the data from main storage.

Caches derive their performance from the principle of locality. According to this principle, over short periods of time processor memory references tend to be clustered in both time and space. Data that will be in use in the near future is likely to be currently in use. Similarly, data that will be in use in the near future is located near data currently in use. The degree to which systems exhibit locality determines the benefits of the cache. A cache can contain a small fraction of the data stored in main storage, yet still have hit rates that are extremely high under normal system loads.

A main storage line fetch occurs when the cache accesses data from main storage. A line castout occurs when a convenient block of data, called a line or cache line, is returned to main storage from the cache after modification to make room for a new line of data. The line of data is the unit which is moved between the cache and main storage and is typically 4 to 16 times longer than the width of the bus between the cache and main storage. This incompatibility results in multiple transfers of data between memory and cache to complete a data transfer operation.

The loading of the cache device is sometimes called inpaging. Inpaging of data from main storage to the cache may take an appreciable amount of time, depending upon the amount of data that is transferred. Often particular data within a line which the processor requests is fetched from main storage first and passed to the processor so that it can resume instruction processing. The remainder of the line is inpaged into the cache immediately afterward. If, during the inpaging operation, a processor requires access to data in the cache, conventionally the processor has been required to wait until the line transfer operation from main storage to the cache was completed.

US-A-4,317,168 (Messina et al) discloses a cache organization that enables cache functions to overlap. The main storage has two lines: data bus-out and data bus-in, each transferring a double word in one cycle. Both buses may transfer respective double words in opposite directions in the same cycle. Moreover, the cache has a quadword write register and a quadword read register, a quadword meaning two double words on a quadword address boundary. During a line fetch of sixteen double words, the first double word or the first pair of double words is loaded into the quadword write register. Thereafter, during the line fetch the even and odd double words are formed into quadwords as received from the bus-out and the quadwords are written into the cache on alternate cycles. If a line castout is required from the same or a different location in the cache, the castout can proceed during the alternate non-write cycles of any line fetch. Any cache bypass to the processor during the line fetch can overlap the line fetch and the line castout. Although processor accesses are permitted in the aforementioned system, they receive lower priority than do memory transfers.

US-A-4,169,284 (Hogan et al) teaches concurrent access to a cache by main storage and a processor by means of a cache control which provides two cache access timing cycles during each processor storage request cycle. No alternatively accessible modules, buffering, delay or interruption is provided for main storage line transfers to the cache.

US-A-4,371,929 (Brann et al) teaches a controllable cache store interface to a shared disk memory employing a plurality of storage partitions whose access is interleaved in a time domain multiplexed manner. A common bus is provided with the shared disk to enable high speed sharing of the disk storage by all processors in a multiprocessor system. The communication between each processor and its corresponding cache memory partition can be overlapped with one another and with accesses between the cache memory and the commonly shared disk memory. Interleaving of transfers within full disk block transfers, however, is not permissible. Thus, processor access to the cache memory is halted until data is transferred from the cache to the disk drives.

US-A-3,705,388 (Nishimoto) discloses a cache memory control system having a shorter access time and a smaller number of memory locations than a main memory. If requested data is not present in the cache memory, the block including the requested data is transferred from the main memory to the cache memory. When a read or write request for the data of another block which is different from the originally requested block is made during the transfer of the originally requested block, then its transfer is interrupted temporarily to immediately effect the read or write request to the other block of the cache memory. After completion of the reading or writing process, the transfer of the originally requested block is resumed. The cache memory control system includes three registers or buffers which temporarily store the data blocks between their transfer between the main memory and the cache memory. From one of these registers, the data block can be passed directly to the processor or instruction and execution unit. This document is the closest prior art to the invention and forms the preamble to claim 1.

It would be advantageous to provide a system for improving performance of a high speed computer.

It is therefore the object of the invention to provide a data processing system for efficient data management between a cache and a main storage in such a high speed computer system, to provide the system for interrupting cache operations when a processor requests access to the data stored therein, to allow a processor to have highest access to the cache, even when data transfer operations are occurring between the cache and main storage, and to provide the system for buffering data from main storage to the cache so that data can be loaded continuously into the cache unless the processor requests access to the data.

These objects are solved by providing a buffer memory for transferring a block of data from the main storage without interruption, the buffer memory being connected to the first register, the high speed memory device and to the multiplexer, and controlling means connected to the multiplexer, whereby said controlling means in operation selects by means of the multiplexer which data from the first register or the high speed memory device is passable to the data processing means.

Such a system has the advantage compared to prior art solutions that data may be transferred directly from the buffer memory to the data processing means and also to the high speed memory device. Data may also be transferred from the high speed memory device to the data processing means. By optimising the data transfer paths to the data processing means, a more efficient management of data can be achieved. Furthermore the use of the buffer allows the inpaging of data into the high speed memory device to be interrupted in order to allow access to other data required by the data processing means from the main storage.

### Brief Description Of The Drawings

A complete understanding of the present invention may be obtained by reference to the accompanying drawings, when taken in conjunction with the detailed description thereof and in which:
- Fig. 1: is a block diagram of a data processing system environment in accordance with the present invention;
- Fig. 2a-2c, taken together: represent a flowchart of inpage buffer operation;

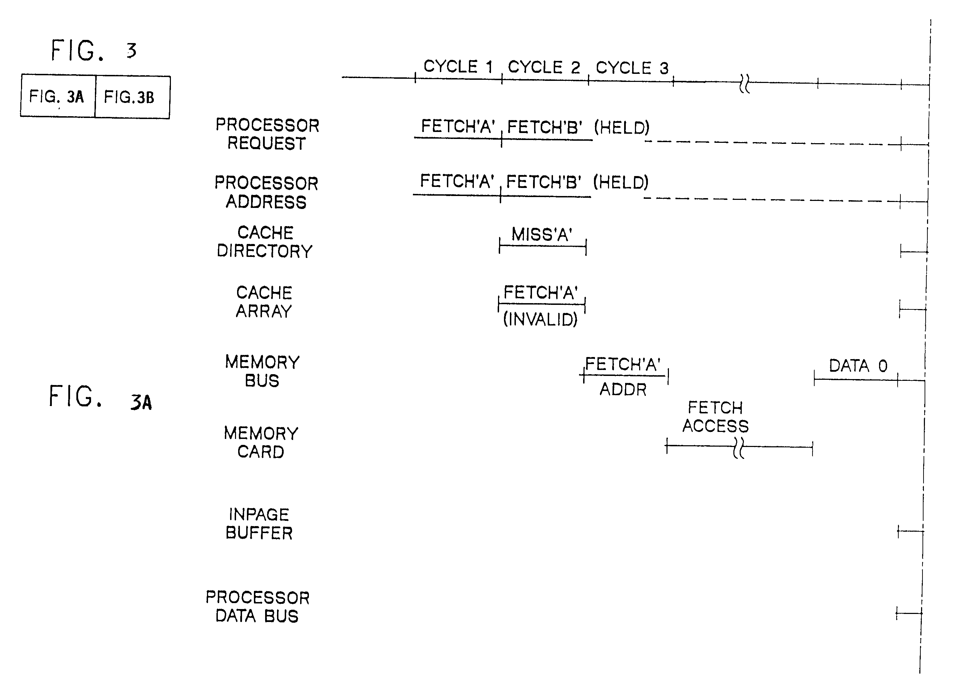

- Fig. 3: is a timing diagram representing the occurrence of events during an inpage operation.

### Detailed Description Of The Preferred Embodiment

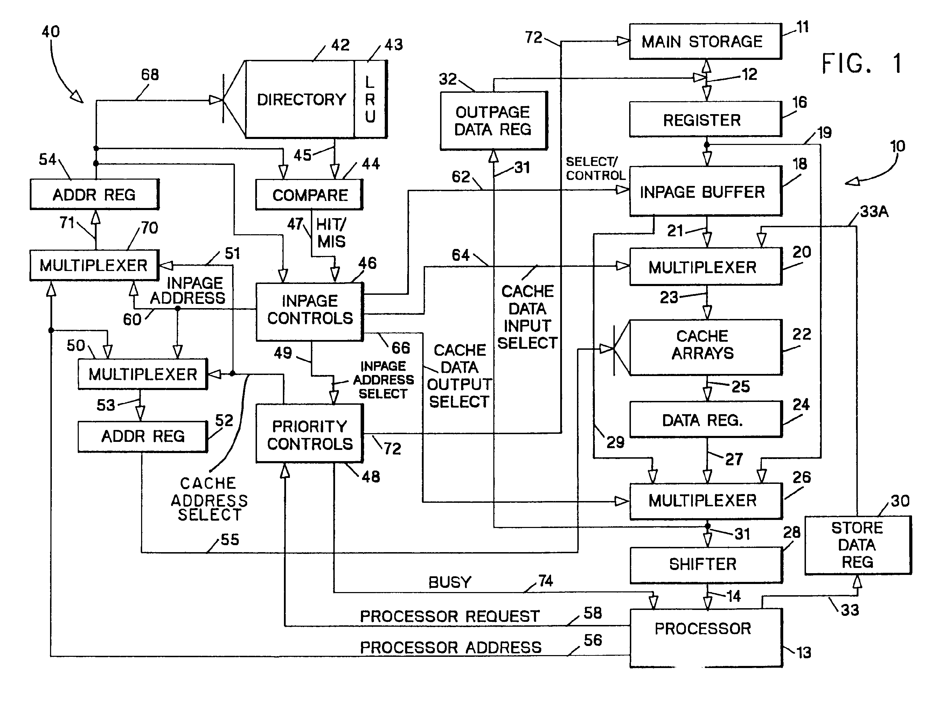

Referring now to FIGURE 1, there is shown a block diagram of a high speed buffer subsystem, shown generally at reference numeral 10, of the data processing system of the present invention. The main storage 11 has capacity for storing a plurality of data bits and words. In the preferred embodiment, the main storage 11 has a capacity of the order of 8M bytes to 256M bytes of data and can be accessed randomly. It should be understood, however, that any reasonable capacity of memory can be used within the scope of the present invention.

Connected to main storage 11 by means of a bidirectional data bus or memory bus 12 is an 8-byte wide data register 16. An inpage buffer 18 is connected to data register 16 by means of bus 19. Its function is described in further detail hereinbelow. An 8-byte wide multiplexer 20 is connected to the inpage buffer 18 by means of a bus 21.

A set of cache arrays is shown at reference numeral 22. The cache arrays 22 in the preferred embodiment comprise four partitions each 8 bytes wide, not shown, the total memory being 16K bytes.

It should be understood, however, that a cache array having six partitions and 24K bytes could also be used. In fact, any size cache array and any number of partitions is possible within the scope of the present invention. Similarly, for purposes of description, one set of cache arrays 22 is herein disclosed, but alternative embodiments having a plurality of caches would also be within the scope of the present invention and could easily be implemented by those skilled in the art once the present invention is understood.

The cache arrays 22 are connected to the multiplexer 20 by means of a bus 23. Another data register 24 is connected to the cache arrays 22 by means of a bus 25.

Another multiplexer 26 is connected to the data register 24 by means of a bus 27. Other inputs to the multiplexer 26 are data from the inpage buffer 18 by means of a bus 29 and data from data register 16 by means of a bus 19.

The output of multiplexer 26 is applied to a shifter 28 by means of a bus 31. The output of multiplexer 26 can also be applied, by means of bus 31, to an outpage data register 32, the output of which is applied to the bidirectional data bus 12.

The shifter 28 generates data signals and transmits them over a bus 14 to a processor 13. Data from the processor 13 is applied to a store data register 30 by means of a bus 33 and thence, by means of a bus 33A, to the multiplexer 20 during store operations.

The cache directory and controls are shown generally at reference numeral 40. A directory 42, having a least recently used (LRU) mechanism 43, provides a portion of addresses to a compare circuit 44 by means of lines 45. The output of the compare circuit 44 is applied to inpage controls 46 over HIT/MISS lines 47. The inpage controls 46 determine whether valid data is in the cache arrays 22 or in the inpage buffer 18.

The inpage controls 46 generate a signal applied to priority controls 48 over INPAGE REQUEST line 49. The priority controls 48 determine whether the processor 13 or the inpage operation from main storage 11 will access the cache arrays 22. The output of priority controls 48 is applied to a multiplexer 50 by means of a CACHE ADDRESS SELECT line 51. The output of the multiplexer 50 is applied to an address register 52 by means of a bus 53. The address register 52 generates ADDRESS signals on bus 55 which is applied to the cache arrays 22.

Another multiplexer 70 receives ADDRESS signals from the processor 13 by means of a PROCESSOR ADDRESS bus 56. Also applied to multiplexer 70 is an INPAGE ADDRESS bus 60 and the CACHE ADDRESS SELECT line 51. Connected to multiplexer 70 by means of bus 71 is an address register 54.

The priority controls 48 receive a PROCESSOR REQUEST signal from the processor 13 by means of line 58.

Also input to the multiplexer 50 are the PROCESSOR ADDRESS signals 56 from the processor 13 and the INPAGE ADDRESS signals 60 generated by the inpage controls 46. The inpage controls 46 also generate three groups of SELECT lines: SELECT/CONTROL 62, which lines are input to inpage buffer 18; CACHE DATA INPUT SELECT 64, which line is input to multiplexer 20; and CACHE DATA OUTPUT SELECT 66, which lines are input to multiplexer 26.

The directory 42 receives an address from address register 54 by means of bus 68.

In operation, the data from main storage 11 is latched in data register 16, from which it is routed to the inpage buffer 18, for an inpage operation. The inpage buffer 18 allows a complete line of data to be transferred from main storage 11 without interruption, as far as the main storage 11 is concerned. This frees the memory bus 12 for other operations, such as accesses by other processors, not shown, or store operations. The inpage buffer 18 also allows an inpaging operation to restart more quickly after an interruption in most cases, since the buffer 18 is integrated into the cache structure.

From the inpage buffer 18, data is written into the cache arrays 22 during those cycles in which the processor 13 does not request cache accesses. Data can be written into the cache arrays 22 in any convenient size block, depending on cache array organization. For example, the cache array 22 may be organized to write 16 bytes of data in a single access, even though the memory bus 12 is only 8 bytes wide.

Data from the inpage buffer 18 can also be gated through multiplexer 26 via bus 29 to the processor 13 to allow early access to data not yet written into the cache arrays 22. In practice, all data from the cache line being inpaged are obtained from the inpage buffer 18, except for the first access which is bypassed directly from data register 16 to the processor 13, until the complete cache line is written into the cache arrays 22 and the directory 42 is marked valid.

The multiplexer 26, in addition to selecting data from the inpage buffer 18 and data register 16, selects data from one of the associativity classes in the cache arrays 22. Thus, the inclusion of data from the inpage buffer 18 does not necessarily add a stage of logic to the cache data path that terminates at the processor 13.

It does, however, increase the number of inputs to the multiplexer 26. Control of the multiplexer 26 is handled by logic in the inpage controls 46, which verifies that valid data is in the inpage buffer 18 and checks the output of directory compare logic 44 for those accesses to other cache lines.

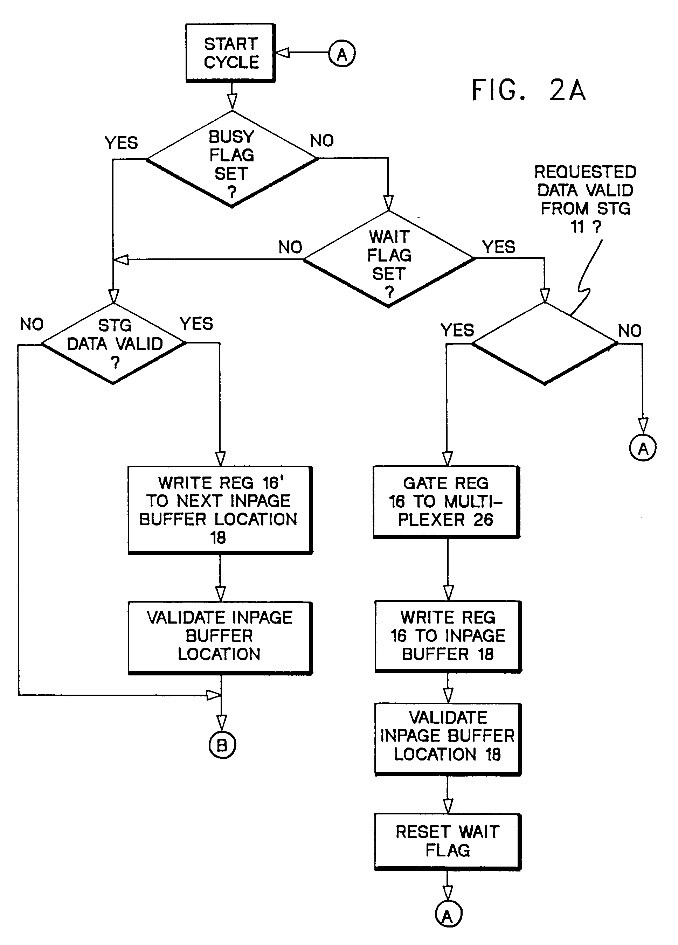

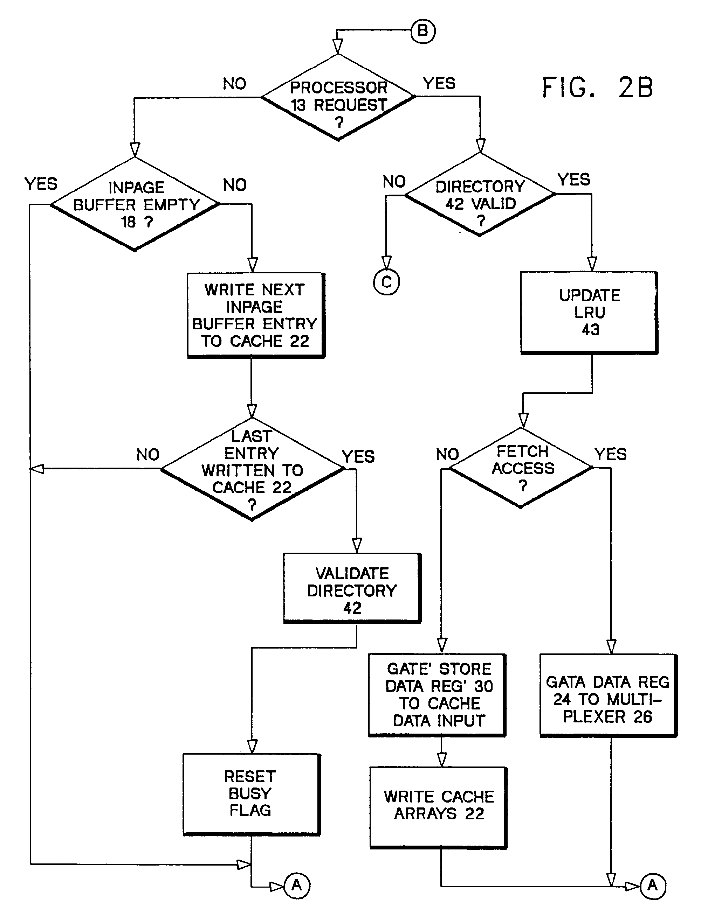

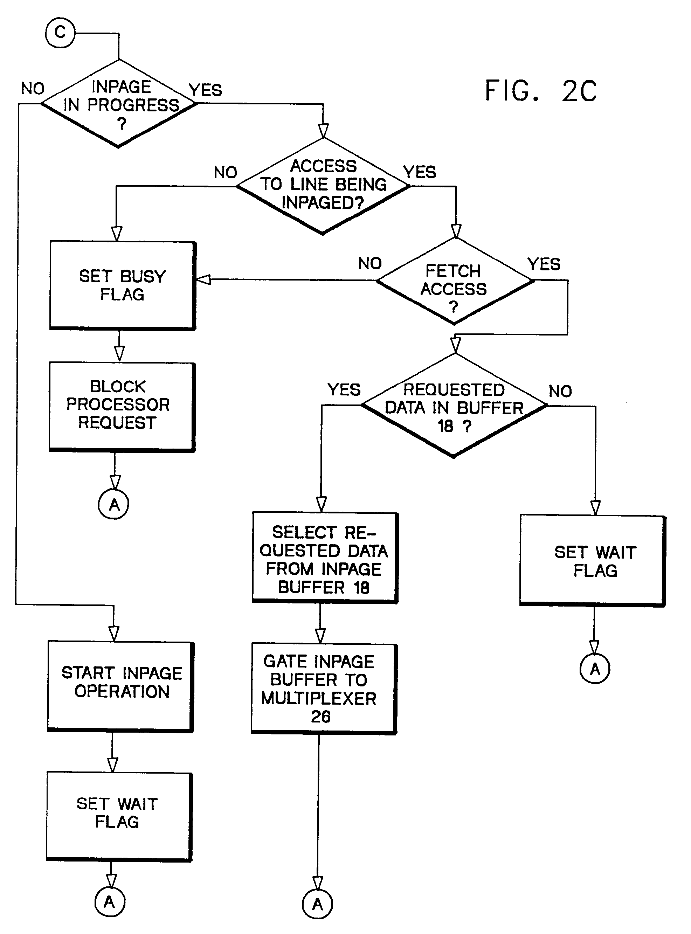

Priority controls 48 determine whether the processor 13 is requesting the next cache access, and, if so, gates the PROCESSOR ADDRESS signal 56 instead of the inpage address to the directory 42 and cache arrays 22. If no PROCESSOR REQUEST signal 58 is present, the inpage buffer 18 loads data to the cache arrays 22 by means of the multiplexer 20 and buses 21 and 23 connected thereto. A more thorough understanding of the specific operations that occur during cache data transfer activity using the inpage buffer 18 can be obtained by referring to FIGURES 2a-2c, which disclose a self-explanatory flowchart thereof. Reference numerals included in the blocks of FIGURES 2a-2c refer to the circuit elements shown in FIGURE 1 and are numbered identically to the reference numerals identifying the elements therein.

Data validity for the cache line being inpaged is determined by a series of latches, not shown, in the inpage controls 46. The number of latches is determined by the number of transfers from main storage 11 to the cache arrays 22 for a complete cache line transfer. Each latch corresponds to a portion of the cache line and is set valid as the portion is loaded into the inpage buffer 18. Another latch, not shown, is set when the inpage operation begins and is reset when the operation is completed. This procedure indicates whether the inpage controls 46 are to be used.

Prior to loading the complete cache line into the cache arrays 22, the processor 13 may attempt to read or write to any storage location. If a fetch is attempted for data which is not yet in the inpage buffer 18, the processor 13 is signalled to wait until valid data is available. If the processor 13 attempts to access another line in the cache arrays 22 and a miss occurs, a BUSY condition is sent over line 74, which causes the processor 13 to wait and then to resend the request when the BUSY condition is reset. Thus, the access to main storage 11 does not begin until the first inpage operation is complete. Data from the processor 13 is not written into the inpage buffer 18 or into the cache arrays 22 for the cache line being inpaged, should a write operation be required to the cache line being inpaged. Instead, the BUSY signal is sent to the processor 13 over line 74. The processor 13 waits until the inpage operation is complete, at which time the data from the processor 13 is written over the inpaged data. The latter restriction can be removed in alternate embodiments in which the controls are more complex but still within the abilities of one skilled in the art.

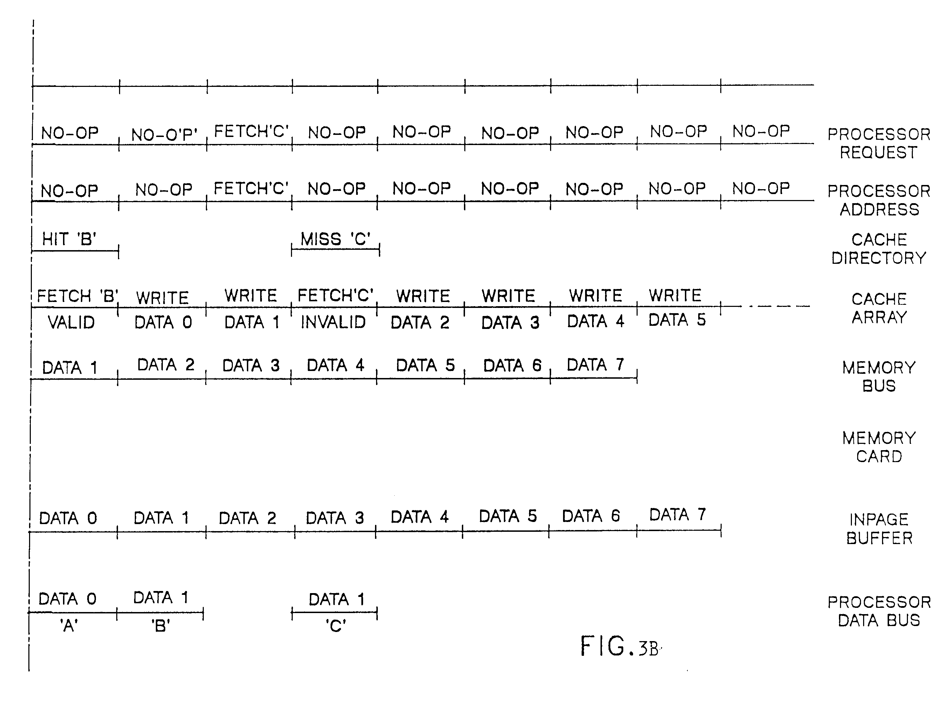

Referring now also to the timing chart of FIGURE 4, data lines labelled "data 0" through "data 7" are transferred sequentially as follows, pursuant to a series of fetch requests identified as 'A', 'B', and so on. A PROCESSOR REQUEST signal 58 (FIGURE 1) is sent to the cache arrays 22 with the address for the first fetch (fetch 'A'), followed immediately by fetch 'B', which is held, pending data returning to the processor 13 for fetch 'A'. The first access to the cache arrays 22 and directory 42 occurs in cycle 2. The directory 42 indicates that an inpage operation is required. The data fetched from the cache arrays 22 on cycle 2 is discarded. On cycle 3 the address is presented to main storage 11 and the access begins. Several cycles later, "data 0" (the part of the cache line initially requested by the processor 13 in fetch 'A') is placed on the bus 12 to the data register 16. On the following cycle, "data 0" is transferred to the processor 13 through multiplexer 26 and concurrently fetch 'B' is allowed. In this example, since the fetch is for data in another cache line present in the cache arrays 22, the appropriate cache output is selected by the multiplexer 26 in the next cycle.

Two cycles later, fetch 'C' of the cache line being inpaged occurs. A directory miss occurs because the cache line is not yet completely stored in the cache arrays 22 and marked valid. The inpage controls 46 determine that the requested data is in the inpage buffer 18 and select the correct buffer location using SELECT/CONTROL lines 62, routing the data through the multiplexer 26 to the processor 13. When "data 7" is finally written into the cache arrays 22, the entry in the directory 42 is marked valid. Subsequent accesses use cache array data.

## Claims

1. Data processing system (10) for interrupting loading of data from a main storage (11) into a high speed memory device (22) comprising
a first register (16) for latching data out of the main storage (11), and
data processing means (13) connected through a multiplexer (26) to the first register (16) and the high speed memory device (22)
characterised by
a buffer memory (18) for transferring a block of data from the main storage (11) without interruption, the buffer memory being connected to the first register (16), the high speed memory device (22) and to the multiplexer (26),
and controlling means (40) connected to the multiplexer (26),
whereby said controlling means (40) in operation selects by means of the multiplexer (26) whether data from the first register (16), from the high speed memory device (22), or from the buffer memory (18) is passable to the data processing means (13).

2. Data processing system (10) according to claim 1 further characterised in that
the buffer memory (18) is adapted to receive data from the main storage (11) and is adapted to transfer the data to said high speed memory device (22) without interruption unless said high speed memory device (22) is being accessed by said data processing means (13).

3. Data processing system (10) according to any one of the above claims further characterised by
comparing means (44) within said controlling means (40) connected to a directory (42) for verifying storage addresses of data within the high speed memory device (22).

4. Data processing system (10) according to any one of the above claims further characterised by
a second register (30) connected to the output of the data processing means (13) and to the input of the high speed memory device (22) for updating the entries in the high speed memory device (22).

5. Data processing system (10) according to any one of the above claims further characterised by
a third register (32) connected to the output of the high speed memory device (22) and to the input of the main storage (11) for transferring data from the high speed memory device (22) to the main storage (11).

6. Method of requesting data from storage in a data processing system (10) with a data processing means (13), a main storage (11), a high speed memory device (22) and a buffer memory (18) for transferring a block of data from the main storage (11) without interruption,
the buffer memory (18) being connected between the high speed memory device (22) and the main storage (11),
whereby the input to the data processing means (13) is connected to the outputs of the main storage (11), the high speed memory device (22), and the buffer memory (18),
comprising the following steps:
a first step of generating the address of the requested data,
a second step of comparing the address of the requested data with the addresses of the data present in the high speed memory device (22), and either,
if the requested data is present in the high speed memory device (22), passing the requested data to the data processing means, or
if the requested data is not present in the high speed memory device (22), carrying out the following steps:
passing a block of data containing the requested data from the main storage (11) to the buffer memory (18) along a main storage bus (12) without interruption,
passing the block of data containing the requested data from the buffer memory (18) to the high speed memory device (22),
passing the requested data from the high speed memory device (22) to the data processing means (13), whereby
a first part of the requested data from the buffer memory (18) is passed directly to the data processing means (13) along a bus (19) bypassing the high speed memory device (22).

7. Method according to claim 6 wherein
the main storage bus (12) is free for further data transfers after the block of data containing the requested data is passed to the buffer (18), and
the further data transfers can take place during the cycles in which the block of data containing the requested data is passed from buffer memory (18) to the high speed memory device (22).

## Patentansprüche

1. Datenverarbeitungssystem (10) zur Unterbrechung des Ladens von Daten aus einem Hauptspeicher (11) in eine Hochgeschwindigkeits-Speichereinheit (22), das folgendes aufweist:
ein erstes Register (16) zum Laden der Daten aus dem Hauptspeicher (11), und
Datenverarbeitungsmittel (13), die durch einen Multiplexer (26) mit dem ersten Register (16) und der Hochgeschwindigkeits-Speichereinheit (22) verbunden sind,
gekennzeichnet durch:
einen Pufferspeicher (18) zur unterbrechungsfreien Übertragung eines Datenblocks aus dem Hauptspeicher (11), wobei der Pufferspeicher mit dem ersten Register (16), der Hochgeschwindigkeits-Speichereinheit (22) und mit dem Multiplexer (26) verbunden ist,
und ein Steuermittel (40), das mit dem Multiplexer (26) verbunden ist,
wobei das Steuermittel (40) beim Betrieb mittels des Multiplexers (26) auswählt, ob Daten aus dem ersten Register (16), aus der Hochgeschwindigkeits-Speichereinheit (22) oder aus dem Pufferspeicher (18) zum Datenverarbeitungsmittel (13) weitergeleitet werden müssen.

2. Datenverarbeitungssystem (10) nach Anspruch 1, das desweiteren dadurch gekennzeichnet ist, daß
der Pufferspeicher (18) angepaßt ist, um Daten aus dem Hauptspeicher (11) zu empfangen und angepaßt ist, um die Daten ohne Unterbrechung zu der Hochgeschwindigkeits-Speichereinheit (22) zu übertragen, außer wenn durch das Datenverarbeitungsmittel (13) auf die Hochgeschwindigkeits-Speichereinheit (22) zugegriffen wird.

3. Datenverarbeitungssystem (10) nach einem der obigen Ansprüche, das desweiteren gekennzeichnet ist durch:
ein Vergleichsmittel (44) innerhalb des Steuermittels (40), das mit einem Verzeichnis (42) verbunden ist, um die Speicheradressen von Daten innerhalb der HochgeschwindigkeitsSpeichereinheit (22) zu prüfen.

4. Datenverarbeitungssystem (10) nach einem der obigen Ansprüche, das desweiteren gekennzeichnet ist durch
ein zweites Register (30), das mit dem Ausgang des Datenverarbeitungsmittels (13) und mit dem Eingang der Hochgeschwindigkeits-Speichereinheit (22) verbunden ist, um die Einträge in der Hochgeschwindigkeits-Speichereinheit (22) zu aktualisieren.

5. Datenverarbeitungssystem (10) nach einem der obigen Ansprüche, das desweiteren gekennzeichnet ist durch
ein drittes Register (32), das mit dem Ausgang der Hochgeschwindigkeits-Speichereinheit (22) und mit dem Eingang des Hauptspeichers (11) verbunden ist, um Daten aus der Hochgeschwindigkeits-Speichereinheit (22) zum Hauptspeicher zu übertragen.

6. Verfahren zum Anfordern von Daten aus dem Speicher in einem Datenverarbeitungssystem (10) mit einem Datenverarbeitungsmittel (13), einem Hauptspeicher (11), einer Hochgeschwindigkeits-Speichereinheit (22) und einem Pufferspeicher (18) zur unterbrechungsfreien Übertragung eines Datenblocks aus dem Hauptspeicher (11),
wobei der Pufferspeicher (18) zwischen die Hochgeschwindigkeits-Speichereinheit (22) und den Hauptspeicher (11) geschaltet ist,
wobei der Eingang zum Datenverarbeitungsmittel (13) mit den Ausgängen des Hauptspeichers (11), der Hochgeschwindigkeits-Speichereinheit (22) und des Pufferspeichers (18) verbunden ist,
wobei das Verfahren die folgenden Schritte umfaßt:
einen ersten Schritt der Erzeugung der Adresse der angeforderten Daten,
einen zweiten Schritt des Vergleichs der Adresse der angeforderten Daten mit den Adressen der in der Hochgeschwindigkeits-Speichereinheit (22) vorhandenen Daten, und
falls sich die angeforderten Daten in der Hochgeschwindigkeits-Speichereinheit (22) befinden, die Weiterleitung der angeforderten Daten zum Datenverarbeitungsmittel, oder
falls sich die angeforderten Daten nicht in der Hochgeschwindigkeits-Speichereinheit (22) befinden, die Ausführung der folgenden Schritte:
Weiterleitung eines Datenblocks, der die angeforderten Daten aus dem Hauptspeicher (11) enthält, ohne Unterbrechung über einen Hauptspeicherbus (12) zum Pufferspeicher (18),
Weiterleitung des Datenblocks, der die angeforderten Daten aus dem Pufferspeicher (18) enthält, zur Hochgeschwindigkeits-Speichereinheit (22),
Weiterleitung der angeforderten Daten aus der Hochgeschwindigkeits-Speichereinheit (22) zum Datenverarbeitungsmittel (13), wobei
ein erster Teil der angeforderten Daten aus dem Pufferspeicher (18) unter Umgehung der Hochgeschwindigkeits-Speichereinheit (22) über einen Bus (19) direkt zum Datenverarbeitungsmittel (13) weitergeleitet wird.

7. Verfahren nach Anspruch 6, wobei
der Hauptspeicherbus (12) frei für weitere Datenübertragungen ist, nachdem der Datenblock, der die angeforderten Daten enthält, zur Hochgeschwindigkeits-Speichereinheit (22) übertragen wurde, und
die weiteren Datenübertragungen während der Zyklen erfolgen können, in denen der Datenblock, der die angeforderten Daten enthält, vom Pufferspeicher (18) zur Hochgeschwindigkeits-Speichereinheit (22) weitergeleitet wird.

## Revendications

1. Système de traitement de données (10) pour interrompre un chargement de données depuis une mémoire principale (11) dans un dispositif de mémoire rapide (22), comprenant:
un premier registre (16) pour verrouiller les données hors de la mémoire principale (11), et
un moyen de traitement de données (13) connecté par un multiplexeur (26) au premier registre (16) et au dispositif de mémoire rapide (22),
caractérisé par
une mémoire tampon (18) pour transférer un bloc de données depuis la mémoire principale (11) sans interruption, la mémoire tampon étant connectée au premier registre (16), au dispositif de mémoire rapide (22) et au multiplexeur (26),
et un moyen de contrôle (40) connecté au multiplexeur (26),
ce qui fait que ledit moyen de contrôle (40), lorsqu'il fonctionne, sélectionne au moyen du multiplexeur (26) si les données provenant du premier registre (16), du dispositif de mémoire rapide (22) ou de la mémoire tampon (18) peuvent passer sur le moyen de traitement de données (13).

2. Système de traitement de données (10) selon la revendication 1, caractérisé en outre en ce que
la mémoire tampon (18) est adaptée pour recevoir des données provenant de la mémoire principale (11) et est adaptée pour transférer les données sur ledit dispositif de mémoire rapide (22) sans interruption à moins qu'il y ait accès audit dispositif de mémoire rapide (22) par ledit moyen de traitement de données (13).

3. Système de traitement de données (10) selon l'une quelconque des revendications précédentes, caractérisé en outre par
un moyen de comparaison (44) dans ledit moyen de contrôle (40) connecté à un répertoire (42) pour vérifier des adresses d'emmagasinage de données dans le dispositif de mémoire rapide (22).

4. Système de traitement de données (10) selon l'une quelconque des revendications précédentes, caractérisé en outre par
un deuxième registre (30) connecté à la sortie du moyen de traitement de données (13) et à l'entrée du dispositif de mémoire rapide (22) pour mettre à jour les entrées dans le dispositif de mémoire rapide (22).

5. Système de traitement de données (10) selon l'une quelconque des revendications précédentes, caractérisé en outre par
un troisième registre (32) connecté à la sortie du dispositif de mémoire rapide (22) et à l'entrée de la mémoire principale (11) pour transférer des données depuis le dispositif de mémoire rapide (22) jusqu'à la mémoire principale (11).

6. Procédé pour demander des données en mémoire dans un système de traitement de données (10) ayant un moyen de traitement de données (13), une mémoire principale (11), un dispositif de mémoire rapide (22) et une mémoire tampon (18) pour transférer un bloc de données depuis la mémoire principale (11) sans interruption,
la mémoire tampon (18) étant connectée entre le dispositif de mémoire rapide (22) et la mémoire principale (11),
ce qui fait que l'entrée sur le moyen de traitement de données (13) est connectée aux sorties de la mémoire principale (11), du dispositif de mémoire rapide (22) et de la mémoire tampon (18),
comprenant les étapes suivantes:
une première étape pour engendrer l'adresse des données requises,
une deuxième étape pour comparer l'adresse des données requises aux adresses des données présentes dans le dispositif de mémoire rapide (22), et soit,
si les données requises sont présentes dans le dispositif de mémoire rapide (22), faire passer les données requises sur le moyen de traitement de données, soit
si les données requises ne sont pas présentes dans le dispositif de mémoire rapide (22), accomplir les étapes suivantes:
faire passer un bloc de données contenant les données requises depuis la mémoire principale (11) jusqu'à la mémoire tampon (18) le long d'un bus de mémoire principale (12), sans interruption,
faire passer le bloc de données contenant les données requises depuis la mémoire tampon (18) jusqu'au dispositif de mémoire rapide (22)
faire passer les données requises depuis le dispositif de mémoire rapide (22) jusqu'au moyen de traitement de données (13),
ce qui fait qu'une première partie des données requises provenant de la mémoire tampon (18) est passée directement sur le moyen de traitement de données (13) le long d'un bus (19) en évitant le dispositif de mémoire rapide (22).

7. Procédé selon la revendication 6, dans lequel
le bus de mémoire principale (12) est libre pour d'autres transferts de données après que le bloc de données contenant les données requises ait été passé sur le tampon (18), et
les autres transferts de données peuvent avoir lieu durant les cycles dans lesquels le bloc de données contenant les données requises est passé depuis la mémoire tampon (18) jusqu'au dispositif de mémoire rapide (22).
